(19) Europäisches Patentamt
European Patent Office
Office européen des brevets

(11) **EP 3 009 987 B1**

(12) **EUROPEAN PATENT SPECIFICATION**

(45) Date of publication and mention
of the grant of the patent:
**01.05.2019 Bulletin 2019/18**

(51) Int Cl.:
***G06T 17/00*** *(2006.01)*

(21) Application number: **14306639.7**

(22) Date of filing: **16.10.2014**

(54) **Method and system for providing a dynamic appearance to a generic, morphable 3D model**

Verfahren und System zur Bereitstellung einer dynamischen Erscheinung für ein generisches, verformbares 3D-Modell

Procédé et système pour fournir un générique pour une apparence dynamique, modèle 3D morphable

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.04.2016 Bulletin 2016/16**

(73) Proprietor: **Alcatel Lucent**
**91620 Nozay (FR)**

(72) Inventor: **Tytgat, Donny**
**2018 Antwerpen (BE)**

(74) Representative: **D'Halleweyn, Nele Veerle Trees Gertrudis et al**
**Arnold & Siedsma**
**Bezuidenhoutseweg 57**
**2594 AC The Hague (NL)**

(56) References cited:
**US-B1- 6 556 196**

- **YONG-LI HU ET AL: "An improved morphable model for 3D face synthesis", MACHINE LEARNING AND CYBERNETICS, 2004. PROCEEDINGS OF 2004 INTERNATIONAL CONFERENCE ON SHANGHAI, CHINA AUG. 26-29, 204, PISCATAWAY, NJ, USA,IEEE, PISCATAWAY, NJ, USA, vol. 7, 26 August 2004 (2004-08-26), pages 4362-4367, XP010763215, DOI: 10.1109/ICMLC.2004.1384604 ISBN: 978-0-7803-8403-3**
- **XIANG SEAN ZHOU ET AL: "ICA-based probabilistic local appearance models", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 1, 7 October 2001 (2001-10-07), pages 161-164, XP010564821, ISBN: 978-0-7803-6725-8**
- **BLANZ V ET AL: "A MORPHABLE MODEL FOR THE SYNTHESIS OF 3D FACES", COMPUTER GRAPHICS PROCEEDINGS. SIGGRAPH 99; [COMPUTER GRAPHICS PROCEEDINGS. SIGGRAPH], ACM ? - NEW YORK, NY, USA, 8 August 1999 (1999-08-08), pages 187-194, XP001032901, DOI: 10.1145/311535.311556 ISBN: 978-0-201-48560-8**

**Description**

Field of Invention

Embodiments of the invention relate to the field of providing a dynamic appearance to a generic, morphable 3D model and in particular to methods and systems for providing a dynamic appearance to a generic, morphable 3D model, based on a training set of 3D models, wherein each 3D model of said training set of 3D models comprises a geometry and an appearance.

Background

The de facto standard for modeling the appearance of 3D models is texture mapping. In this technique, a mesh based 3D model is used and this mesh is unfolded onto a 2D manifold. This 2D manifold is then parameterized (each vertex of the mesh gets so-called texture coordinates), and associated with a so-called texture map. Such a texture map is, in its most simple instance, a digital image. The parameterization of the unfolded mesh relates the vertices of the mesh to pixel coordinates on the image, and can thus be used to assign appearance properties to the 3D surface.

Patent document US6556196B1 discloses a method for modeling textured 3D faces. A morphable face model is derived by transforming shape and texture of an example set of 3D face models into a vector space representation. New faces and expressions can be modeled by forming linear combinations of the prototypes.

Summary

The object of embodiments of the invention is to provide a method and a system for providing a dynamic appearance to generic morphable 3D models, which do not have a predefined topology, without using predefined texture maps. Embodiments of the invention aim to provide a method that is more generally and broadly applicable to model dynamic 3D appearances as compared with prior art methods such as the above described texture mapping.

According to a first aspect of the invention there is provided a method for providing a dynamic appearance to a generic, morphable 3D model, based on a training set of 3D models, wherein each 3D model of said training set of 3D models comprises a geometry and an appearance. The method comprises determining a set of sampling locations, each sampling location of said set of sampling locations being located outside of each 3D model of each 3D model of said training set of 3D models, and obtaining, for a plurality of 3D models of said training set of 3D models, from each sampling location of said set of sampling locations a local appearance sample. Such local appearance sample comprises a 2D projection of an appearance of an area, corresponding to the according sampling location, of each 3D model of the plurality of 3D models, on that sampling location. The method further comprises building for each sampling location of the set of sampling locations a local appearance model by determining local principal components of said local appearance samples by performing a principal component analysis of said local appearance samples, and linearly combining said local principal components for each 3D model of said plurality of 3D models and finally for a predetermined point on the generic, morphable 3D model: determining an appearance of the point, based on the local appearance models.

The technical problem which is addressed, relates to modeling the dynamic appearance properties of generic morphable 3D models in an automated manner. This is a difficult challenge because the generic nature of such models combined with the dynamicity of the appearance does not allow for traditional techniques such as texture mapping to be used. Generic 3D models in this context do not have a pre-defined topology, and thus cannot use pre-defined texture maps, which require a consistent parameterization of the surface into 2D.

The problem with the above described texture mapping approach is the link that is required between the mesh and the texture map; i.e. one needs the so-called texture coordinates for each of the vertices. In a 3D morphable model, which can change over time, this texture mapping operation also needs to be consistent over the instances of the model. So the upper lip for example always needs to be mapped to the same 2D region on the texture image. In generic morphable 3D models, this is a requirement that cannot be guaranteed due to the changing topology and variable surface sampling rates.

A further issue arises with the modeling of the dynamic nature of the appearance. When modeling this globally - i.e. the complete appearance at once - it is difficult to generalize the model well. In example-based modeling for instance, one will be able to model the examples very well, but any deviation from these examples will be modeled poorly.

Embodiments of the invention are based *inter alia* on the insight that the above described problems can be solved by employing an implicit and local manner of modeling the appearance of generic 3D models. Embodiments of the invention move away from the object-space approach of traditional methods and instead uses a world-space view. This makes the appearance model implicit, thus removing the requirement of having a vertex-to-appearance mapping. This is important for dynamically generated 3D models in which establishing this mapping is not straightforward without manual intervention.

In order to model the appearance in world-space, a set of sampling locations is determined. From each of these sampling locations a local appearance sample is obtained. The information captured from these sampling locations is then modeled and new instances can be synthesized from it. The generalization properties of the modeling method benefit from this local approach, as mentioned before.

In order to build a global appearance model, the local appearance models can be used to determine the appearance of any point on the generic 3D model. This does not require any texture mapping, and can thus be used on generic 3D models (e.g. a 3D model instance that was synthesized). Furthermore, due to the local modeling approach, the proposed method allows for a generalization which cannot be offered by prior art methods. This approach enables appearance modeling that is local and does not require texture mapping. Its benefits are important for automated 3D model learning and synthesis in an efficient manner.

Building a local appearance model comprises for each sampling location determining local principal components of said local appearance samples by performing a principal component analysis of said local appearance samples, and linearly combining said local principal components.

Instead of using the obtained local appearance samples from the plurality of 3D models of the training set of 3D models, directly as bases for a local appearance model, principal component analysis (PCA) is used to determine from the obtained local appearance samples a more suited set of bases. PCA will return an ordered orthogonal set of bases which allows reducing the number of bases that are used to model the appearance space in a preferred manner.

According to an embodiment building a local appearance model comprises for each 3D model of said plurality of 3D models, combining all local appearance samples into one general appearance sample, determining general principal components of said general appearance samples by performing a principal component analysis of said general appearance samples, deducing from said general principal components local principal components, and linearly combining said local principal components.

Instead of performing a PCA on the obtained local appearance samples directly, this approach first combines all local appearance samples per 3D model in a general appearance sample for that 3D model, prior to PCA. For example, if there are five 3D models, which serve as 3D training models, five general appearance models are constructed. Consecutively, a PCA is performed on the set of general appearance samples. This way, fewer weights have to be calculated but larger vectors (general appearance samples) have to be processed. After determining the general principal components, these components can be split up into local principal components in a straightforward manner to determine the most appropriate set of bases for building the local appearance models. According to an embodiment determining a set of sampling locations comprises determining a set of sampling locations within a predefined volume of a 3D space, such that each sampling location of said set of sampling locations is located outside of each 3D model of said set of 3D models, when said 3D model is placed inside said predefined volume.

Determining sampling locations outside of the 3D models in the training set, underlines the world-space approach of the proposed method. By placing each 3D training model at the same position inside the predefined volume, it is achieved that from each sampling location, which is located at a predefined position with regards to the predefined volume, different 3D training models are assessed in a uniform manner (from a certain distance, according to a certain angular direction). This allows for local appearance models to be built in a more uniform manner.

According to an embodiment determining an appearance of the point on the generic, morphable 3D model, based on said local appearance models comprises assigning a weight to each local appearance model, being representative for its correlation with said point. It further comprises calculating the appearance of the point as a weighted sum of the local appearance models and their assigned weight.

In this approach the local appearance models are projected onto the generic 3D model. The used projection operator does not require any texture mapping, and can thus be used on generic 3D models, which are synthesized.

According to an embodiment the weights are based on at least one parameter of the group comprising a distance between the point and the sampling location of the local appearance model and the angular difference between a line connecting the point with the sampling location and a surface normal in the point.

In determining the appearance of the point on the generic 3D model, the proposed method takes into account from which sampling locations, relevant information was obtained for modeling the appearance of that particular point. When a sampling location is considered as relevant, weights are assigned to the local appearance model of that sampling location, which take into account the distance between the sampling location and the point on the generic 3D model, and the angular direction at which the point was approached from said sampling direction. A local appearance model from a sampling location which is located closer to the to be modelled point, will contribute more than a local appearance models from a sampling location which is located further away. Likewise, when the local appearance samples, on which a local appearance model is based, are taken from practically straight in front of the generic model (according to the surface normal), they will contribute more to the appearance of the point than when taken from a sharp angle.

According to an embodiment the 2D projections are low resolution projections. Using low resolution to obtain the local appearance samples is preferable since this will improve the generalization properties of the local appearance models. Preferable resolutions include, but are not limited to 8x8, 16x16, 32x32 and 64x64.

According to another aspect of the invention,

there is provided a computer program product comprising computer-executable instructions for performing the method of any one of the claims 1 to 7, when the program is run on a computer.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

The skilled person will understand that the hereinabove described technical considerations and advantages for method embodiments also apply to the below described system embodiments, *mutatis mutandis.*

According to another aspect of the invention, there is provided a system for providing a dynamic appearance to a generic, morphable 3D model, based on a training set of 3D models, wherein each 3D model of said training set of 3D models comprises a geometry and an appearance. The system comprises a sampling location determining unit configured for determining a set of sampling? each sampling location of said set of sampling locations being located outside of each 3D model of each 3D model of said training set of 3D models, and a sample obtaining unit configured for obtaining, for a plurality of 3D models of said training set of 3D models, from each sampling location of said set of sampling locations a local appearance sample, comprising a 2D projection of an appearance of an area, corresponding to said sampling location, of each 3D model of the plurality of 3D models, on said sampling location. The system further comprises a model building unit configured for building for each sampling location of the set of sampling locations a local appearance model by determining local principal components of said local appearance samples by performing a principal component analysis of said local appearance samples, and linearly combining said local principal components for each 3D model of said plurality of 3D models and an appearance determining unit configured for determining, for a predetermined point on the generic, morphable 3D model, an appearance of said point based on said local appearance models.

The model building unit is further configured for determining for each sampling location local principal components of said local appearance samples by performing a principal component analysis of said local appearance samples, and for linearly combining said local principal components.

According to an embodiment the model building unit is further configured for combining for each 3D model of said plurality of 3D model all local appearance samples into one general appearance sample, for determining general principal components of said general appearance samples by performing a principal component analysis of said general appearance samples, for deducing from said general principal components local principal components, and for linearly combining said local principal components.

According to an embodiment the sampling location determining unit is configured for determining a set of sampling locations within a predefined volume of a 3D space, such that each sampling location of said set of sampling locations is located outside of each 3D model of said set of 3D models, when said 3D model is placed inside said predefined volume.

According to an embodiment the appearance determining unit is configured for assigning a weight to each local appearance model, being representative for its correlation with said point, and calculating said appearance of said point as a weighted sum of said local appearance models and their assigned weight.

According to an embodiment said weights are based on at least one parameter of the group comprising a distance between said point and the sampling location of said local appearance model and the angular difference between a line connecting said point with the sampling location and a surface normal in said point.

According to an embodiment said 2D projections are low resolution projections.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

    Figure 1 illustrates an instance of a generic morphable 3D model, solely comprising a geometry and thus lacking an appearance;
    Figure 2 is a flowchart illustrating an embodiment of an exemplary method for providing a dynamic appearance to a generic, morphable 3D model;
    Figure 3 illustrates the instance of a generic morphable 3D model, provided with an appearance;
    Figure 4 illustrates a 3D training model which is placed in a predefined volume of a 3D space, along with some sampling locations of the set of sampling locations;
    Figure 5 illustrates a resulting appearance model, morphing (2,3,4) between two 3D training models (1 and 5); and
    Figure 6 is a schematic drawing of an exemplary embodiment of a system for providing a dynamic appearance to a generic, morphable 3D model.

Description of embodiments

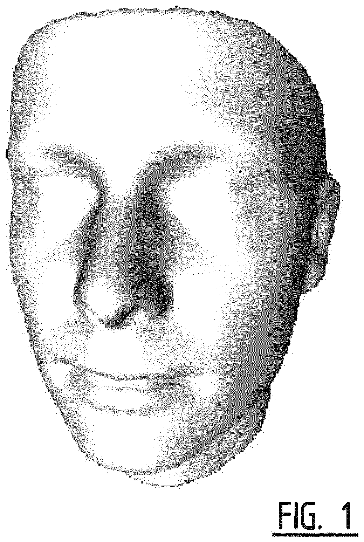

Embodiments of the invention are based on the known concept of implicit morphable models, which was introduced in European patent application, in the name of the Applicant, with application number [14305593.7], included herein by reference. In this concept, a 3D morphable model is based on a linear combination of optimal bases that depict implicit surfaces. An instance of such a 3D morphable model is shown in Figure 1. Note that different triangle-mesh representations of instances of such a model do not necessarily have the same amount of vertices and triangles. Even the topology can be variable amongst different instances. While this offers great flexibility from the object modeling front, concerning only the geometry of the model, it does pose issues for modeling the appearance. One cannot use traditional approaches for this reason. An initial option was considered to include appearance information in the implicit surface function. While this can be sufficient for model fitting, it is not suitable for model reconstruction where the rendering quality requirements are higher. That option furthermore assumes that geometry sampling rates are the same as the appearance sampling rates. This is not always a good choice, especially when targeting reconstruction for rendering. Humans are more sensitive to appearance details than geometry details when viewing renders of faces of people, sampling rates should thus be able to reflect this.

Assume we have a training set of 3D models along with their appearance. Such a training set can comprise several instances of for example a human face, wherein every instance represents another facial expression (i.e. smiling face, frowning face,...). These models are used to create a morphable 3D model that spans a meaningful manifold covered by this training set. 'Meaningful' in this context is related to the trade-off between generalization and over-fitting. One wants to have a model that can cover more than the training set, however the model instances still need to have some similarity with this set. Taking the example wherein a training set comprises a 3D model of a frowning face and a 3D model of a smiling face, the resulting morphable model should be able to smoothly transition from frowning to smiling, generically forming transitional models of faces with a more or less neutral expression (between smiling and frowning).

Assumption is made that an implicit morphable model is built for the geometry part, thus a 3D generic morphable shape is available, but no appearance to associate with the generic shape. Now we want to also have the appearance to be modelled in a way that the appearance sampling rate can be chosen independently from the geometry sampling rate, and that the combined model can be used for reconstruction and rendering purposes.

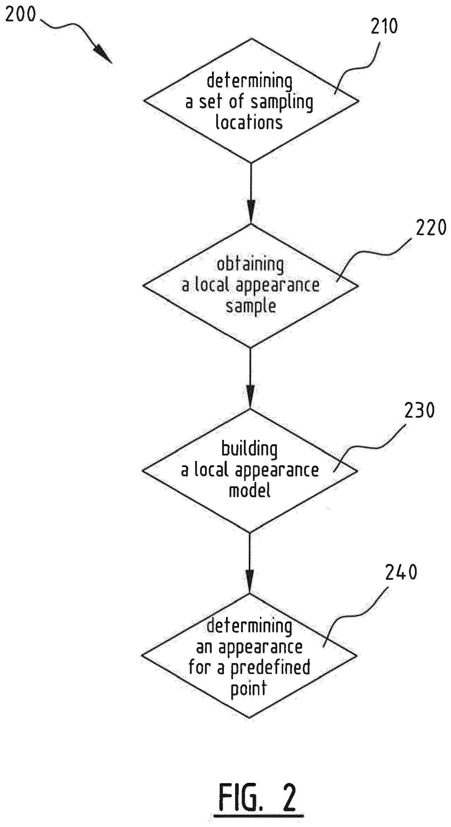

The flowchart in Figure 2 illustrates a method 200 for providing a dynamic appearance to a generic, morphable 3D model, based on a training set of 3D models, wherein each 3D model of said training set of 3D models comprises a geometry and an appearance. As mentioned above, assumption is made that a morphable geometry of the 3D model, based on the training set of 3D models is available, and that a accompanying appearance is to be determined. The method comprises a first step 210 of determining a set of sampling locations and a step 220 of obtaining, for a plurality of 3D models of said training set of 3D models, from each sampling location of said set of sampling locations a local appearance sample. Such local appearance sample comprises a 2D projection of an appearance of an area, corresponding to the according sampling location, of each 3D model of the plurality of 3D models, on that sampling location. Sampling locations are preferably chosen such that when combining all local appearance samples, the entire appearance of each 3D training model has been sampled at least once. One can then introduce the concept of a 'micro-camera' placed at every sampling location. Such a micro-camera can then capture the local appearance of the 3D training models from world-space. Note that these micro-cameras are virtual cameras, and not actual devices. They are placed around the to-be-modelled object at a predefined distance and oriented in a predefined angular direction, and a local rendering operation is performed for each of these micro-cameras. The method 200 further comprises a step 230 of building for each sampling location of the set of sampling locations a local appearance model by linearly combining the local appearance samples from said sampling location for each 3D model of said plurality of 3D models. A local appearance model can be built by first concatenating all pixel information from the micro-cameras (2D projections) into a single vector. For example an appearance vector ($C_{n,t}$) from a micro-camera, that obtains RGB-values, at a sampling location (n) for an instance (t) can be written as: $C_{n,t}= (r_1, g_1, b_1, r_2, g_2, b_2, ..., r_{1024}, g_{1024}, b_{1024})$ when the micro-camera has a resolution of 32x32. A simple local appearance model (A) can then be built by taking linear combinations of the local appearance samples from the k 3D training models or training instances: $A'_n = w_1*C_{n,1} + w_2*C_{n,2} + ... + w_k*C_{n,k}$. This is done for every micro-camera. The method further comprises a step 240 which comprises for a predetermined point on the generic, morphable 3D model: determining an appearance of the point, based on the local appearance models. In order to create a global appearance model, the local appearance models can be projected onto the generic 3D model. This projection operator, which will be further elaborated on below, does not require any texture mapping, and can thus be used on generic 3D models.

In an embodiment of the invention, information which is representative for the direction of a micro-camera is incorporated in a local appearance model and/or sample, along with the appearance information (i.e. RGB-values). Thus, the direction in which a local appearance sample is taken, can be added to the model. Including this directional information will improve modeling quality and therefore reconstruction quality.

In a further embodiment the direction of a micro-camera is chosen to be the direction to the nearest point on the surface of the 3D model. The normal can be added to the appearance vector and modeled in the same way as the other data, as will be elaborated on below.

According to an embodiment step 230 of building a local appearance model comprises for each sampling location determining local principal components of said local appearance samples by performing a principal component analysis of said local appearance samples, and linearly combining said local principal components.

As described above a local appearance model (A) can be built by taking linear combinations of the local appearance samples from the k 3D training models or training instances: $A_n = w_1 * C_{n,1} + w_2 * C_{n,2} + ... + w_k * C_{n,k}$. As such, one requires k weights in order to instantiate this appearance model. This is not optimal however. The bases that are used (the local appearance samples from the 3D training models) do not span the space in an optimal manner. One method to create such an optimal set of bases is applying PCA to the local appearance samples. In doing so, PCA will return an ordered orthogonal set of new bases which guarantees that the captured variance of each base is higher than that of the next base. As such, one can reduce the number of bases that are used to model the appearance space in an optimal manner. Thus, instead of using k weights, only 1 weights (1 < k) need to be used. The first 1 bases ($B_{n,1},..., B_{n,1}$) from the PCA set can be selected and it is assured that this set will optimally span the space with regards to the variance when projecting the 3D training set data onto the reduced space. The local appearance model ($A'_n$) with new bases and adapted weights then becomes: $A'_n = w'_1 * B_{n,1} + w'_2 * B_{n,2} + ... + w'_1 * B_{n,1}$. This can again be done for every micro-camera.

According to an embodiment step 230 of building a local appearance model comprises for each 3D model of said plurality of 3D models, combining all local appearance samples into one general appearance sample, determining general principal components of said general appearance samples by performing a principal component analysis of said general appearance samples, deducing from said general principal components local principal components, and linearly combining said local principal components. Instead of performing a PCA on the obtained local appearance samples directly as described above, this approach first combines all local appearance samples per 3D model in a general appearance sample for that 3D model, prior to PCA. In practice this means that every local appearance vector (2D projection) for a particular 3D training model is concatenated in one large, general appearance vector. For example, if there are five 3D models, which serve as 3D training models, five general appearance models are constructed. Consecutively, a PCA is performed on the set of large general appearance samples (or vectors). This way, fewer weights have to be calculated but larger vectors (general appearance samples) have to be processed. After determining the general principal components, these components can be split up into local principal components in a straightforward manner to determine the most appropriate set of bases for building the local appearance models.

Combining all micro-camera samples and building a model from these, as described above, can be beneficial when the overall appearance variance is relatively low compared to the local variance. In that case only one model with local weight instances is needed, at the probable expense of more weights per micro-camera instance. A trade-off is possible between model state (size of the appearance vector) and model instantiation (number of weights).

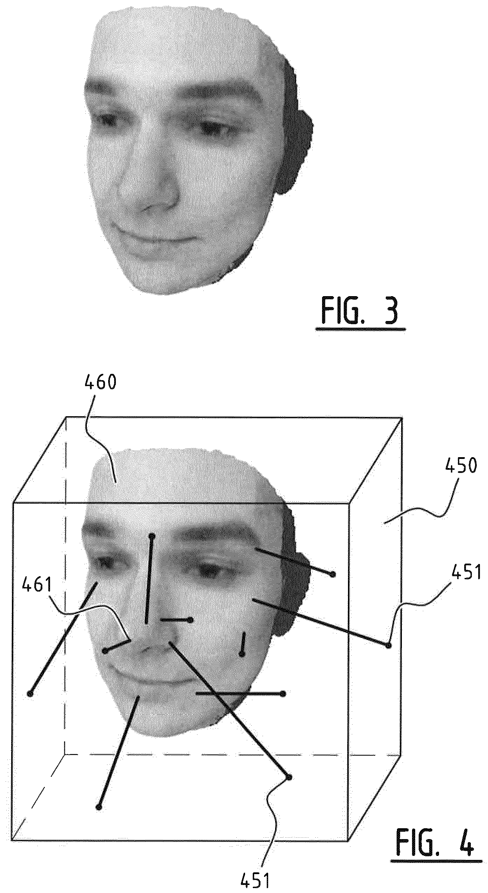

When local appearance models have been built, they can be combined with the geometry model (as shown in Figure 1) from the implicit morphable 3D model, which results into an integrated geometry/appearance model as shown in Figure 3. In such a model geometry changes with appearance and vice versa. A straightforward manner to achieve a successful combination of geometry and appearance is by augmenting the appearance fitting weights to the geometry vector, and applying known modeling operations(e.g. from European patent application with application number [14305593.7]). Pixel information can even be directly appended to the geometry information if the computational resources allow it. Integrating the local appearance models into the implicit morphable model as illustrated in Figure 3 is not possible with the current state-of-the-art methods due to the generic nature of the 3D model. The render combines over 1300 local appearance models into one final render. How to do this in an efficient manner will be explained below.

Figure 4 illustrates an embodiment of the invention wherein step 210 of determining a set of sampling locations comprises determining a set of sampling locations within a predefined volume 450 of a 3D space, such that each sampling location 451 of said set of sampling locations is located outside of each 3D model 460 of said set of 3D models, when said 3D model is placed inside said predefined volume 450.

In order to assess where to sample the world-space for appearance information, a first set of sampling locations 451 can be created by uniformly sampling for example a boxed 3D space 450 at 128x128x128. From this set, a subset of sampling locations is selected by determining which sampling locations are within a distance range of [m*T,n*T] of any of the 3D models of the training set of 3D models. Assume for example that m = 0.8, n = 1.2 and T = sqrt(3*(1/128)^2). This approach results is a set of more than 1300 sampling locations 451.

At each of these more than1300 sampling locations 451, a virtual micro-camera is placed and a local appearance sample (2D projection) is obtained. The micro-camera is therefore located at a predefined distance from a point 461, located on the surface within an area of the 3D training model that is sampled by that particular micro-camera. Additionally, the line connecting the point 461 and the according sampling location 451 defines an angular direction when compared to the surface normal in point 461. The resolution of these micro-cameras can, in theory, be chosen freely.

In a preferred embodiment however the 2D projections are low resolution projections. Low resolution images are advisable in order to improve the generalization properties of the local appearance models. When more global resolution is needed, one can sample the 3D space more densely. In our examples, the micro-camera resolution is set at 32x32 pixels. Preferable resolutions include, but are not limited to 8x8, 16x16, 32x32 and 64x64.

According to an embodiment determining an appearance of the point on the generic, morphable 3D model, based on said local appearance models comprises assigning a weight to each local appearance model, being representative for its correlation with said point. It further comprises calculating the appearance of the point as a weighted sum of the local appearance models and their assigned weight. In this approach the local appearance models are projected onto the generic 3D model. The used projection operator does not require any texture mapping, and can thus be used on generic 3D models, which are synthesized. To determine the appearance (a) of a point (g) 461 on the geometry of a generic model, following formula can be used:

$$a(\boldsymbol{g}, t) = \sum_{p \in S} w_p \, mda_s(\boldsymbol{p}, t)_{(u_{p,g}, v_{p,g})}$$

In this formula t is a time parameter, S is the set of sampling locations (micro-camera locations), $mda_s(\mathbf{p},t)$ is the local appearance model related to the micro-camera at samling location p (part of S) and $u_{p,g}$ and $v_{p,g}$ are coordinates of a projection of point (g) onto the 2D projection (micro-camera image) at sampling location (p) 451. As such the *mda* component in the top formula gives you the relevant angular local appearance model for a certain micro-camera at sampling location (p) 451. This can be 0 if the angular local appearance model is out of range of the to-be-modelled point (g) (e.g. point (g) is behind the micro-camera).

According to an embodiment the weights ($w_p$) are based on at least one parameter of the group comprising a distance between the point (g) 461 and the sampling location 451 of the local appearance model and the angular difference between a line connecting the point with the sampling location and a surface normal in the point. As such the weights can be written as:

$$w_p = f\big(\boldsymbol{n_g}, \boldsymbol{g} - \boldsymbol{p}\big) + k(|\boldsymbol{g} - \boldsymbol{p}|)$$

The weight of each micro-camera ($w_p$) is determined by an f-component and a k-component. The f-component represents the difference between the surface normal in point (g), and the incidence angle of the sample (the direction going from point (g) towards sampling location (p)). Therefore, when the micro-camera is looking straight at the surface of the 3D model, its local appearance samples are going to be weighted more heavily than those of a micro-camera that is viewing the surface at a very sharp angle. The f-function is left open, it could be linear with the angular difference (e.g. f = 0-0.5 for angular differences of 50-0 degrees), but this is not required.

The k-component takes into account the distance between point (g) 461 and sampling location (p) 451- the further the micro-camera is from point (g) 461, the lesser its weight/contribution will be. As with the f-component, the k-function can be linear, but it is not required.(e.g. k = 0-0.5 for distances 3-0 m.)

As such the proposed method takes into account from which sampling locations, relevant information was obtained for modeling the appearance of that particular point. When a sampling location is considered as relevant, weights are assigned to the local appearance model of that sampling location, which take into account the distance between the sampling location and the point on the generic 3D model, and the angular direction at which the point was approached from said sampling direction. A local appearance model from a sampling location which is located closer to the to be modelled point, will contribute more than a local appearance models from a sampling location which is located further away. Likewise, when the local appearance samples, on which a local appearance model is based, are taken from practically straight in front of the generic model (according to the surface normal), they will contribute more to the appearance of the point than when taken from a sharp angle.

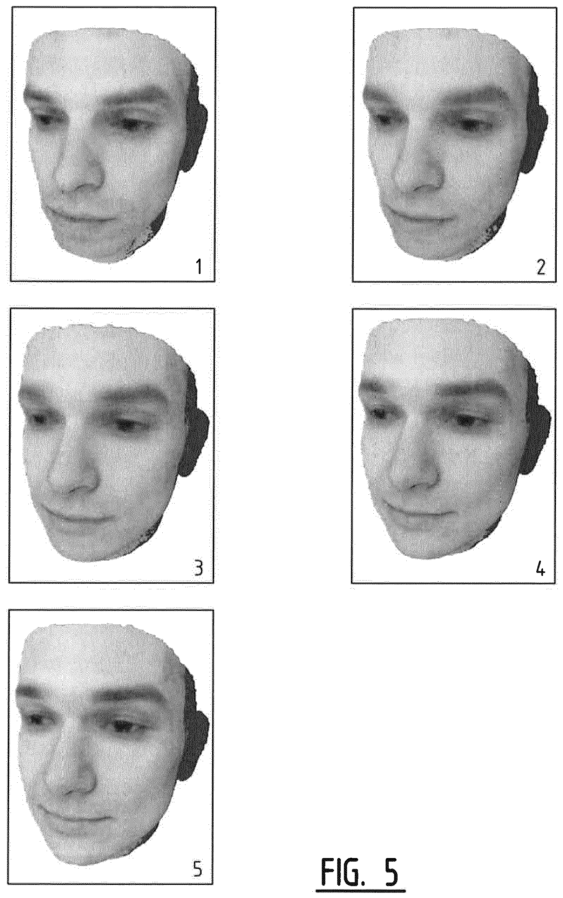

Figure 5 illustrates the morphing properties of the resulting model; a linear interpolation is used on the fitted weights between two 3D training models (1 and 5). Not only the geometry morphs smoothly from one instance to the other (1,2,3,4 and 5), but also the appearance. This result for generic models would not be possible when using current state-of-the-art methods.

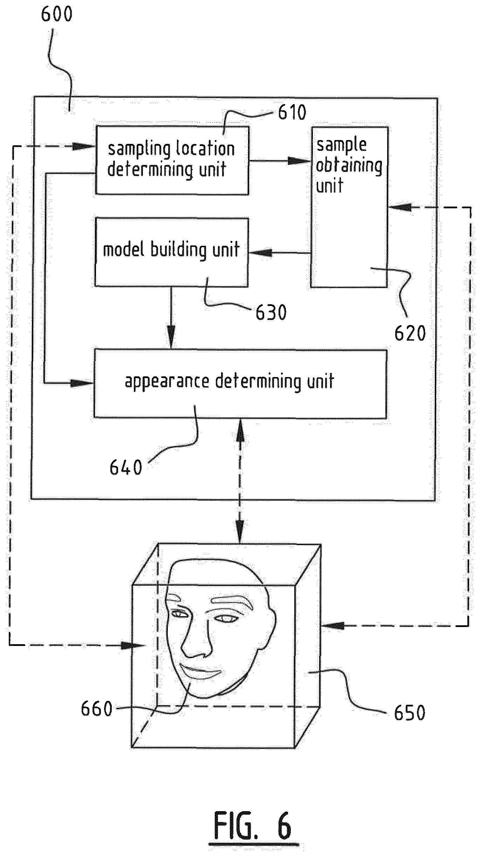

Figure 6 schematically shows a system 600 for providing a dynamic appearance to a generic, morphable 3D model 660, based on a training set of 3D models, wherein each 3D model of said training set of 3D models comprises a geometry and an appearance. The system 600 comprises a sampling location determining unit 610 configured for determining a set of sampling locations and a sample obtaining unit 620 configured for obtaining, for a plurality of 3D models of said training set of 3D models, from each sampling location of said set of sampling locations a local appearance sample, comprising a 2D projection of an appearance of an area, corresponding to said sampling location, of each 3D model 660 of the plurality of 3D models, on said sampling location. The system further comprises a model building unit 630 configured for building for each sampling location of the set of sampling locations a local appearance model by linearly combining the local appearance samples from said sampling location for each 3D model 660 of said plurality of 3D models and an appearance determining unit configured for determining, for a predetermined point on the generic, morphable 3D model 660, an appearance of said point based on said local appearance models.

According to an embodiment the model building unit 630 is further configured for determining for each sampling location local principal components of said local appearance samples by performing a principal component analysis of said local appearance samples, and for linearly combining said local principal components.

According to an embodiment the model building unit 630 is further configured for combining for each 3D model of said plurality of 3D model all local appearance samples into one general appearance sample, for determining general principal components of said general appearance samples by performing a principal component analysis of said general appearance samples, for deducing from said general principal components local principal components, and for linearly combining said local principal components.

According to an embodiment the sampling location determining unit 610 is configured for determining a set of sampling locations within a predefined volume 650 of a 3D space, such that each sampling location of said set of sampling locations is located outside of each 3D model 660 of said set of 3D models, when said 3D model 660 is placed inside said predefined volume 650.

According to an embodiment the appearance determining unit 640 is configured for assigning a weight to each local appearance model, being representative for its correlation with said point, and calculating said appearance of said point as a weighted sum of said local appearance models and their assigned weight.

According to an embodiment said weights are based on at least one parameter of the group comprising a distance between said point and the sampling location of said local appearance model and the angular difference between a line connecting said point with the sampling location and a surface normal in said point.

According to an embodiment said 2D projections are low resolution projections.

It should be appreciated by those skilled in the art that whilst the principles of the invention have been set out above with reference to exemplary 3D models of human faces (with different facial expressions), these principles can be applied to a wide variety of 3D models.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors", "modules" or "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor", "controller" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

**Claims**

1. A computer-implemented method (200) for providing a dynamic appearance to a generic, morphable 3D model, based on a training set of 3D models, wherein each 3D model of said training set of 3D models comprises a geometry and an appearance, said method comprising:

- determining (210) a set of sampling locations, wherein each sampling location of said set of sampling locations is located outside of each 3D model of said training set of 3D models;
- obtaining (220), for a plurality of 3D models of said training set of 3D models, from each sampling location of said set of sampling locations a local appearance sample, comprising a 2D projection of an appearance of an area, corresponding to said sampling location, of each 3D model of the plurality of 3D models, on said sampling location;
- building (230) for each sampling location of the set of sampling locations a local appearance model by determining local principal components of said local appearance samples by performing a principal component analysis of said local appearance samples, and linearly combining said local principal components for each 3D model of said plurality of 3D models;
- for a predetermined point on the generic, morphable 3D model: determining (240) an appearance of said point based on said local appearance models.

2. The method according to claim 1, wherein building (230) a local appearance model comprises, for each 3D model of said plurality of 3D models, combining all local appearance samples into one general appearance sample, determining general principal components of said general appearance samples by performing a principal component analysis of said general appearance samples, deducing from said general principal components local principal components, and linearly combining said local principal components.

3. The method (200) according to any one of the preceding claims, wherein determining (210) a set of sampling locations comprises determining a set of sampling locations within a predefined volume (450) of a 3D space, such that each sampling location (451) of said set of sampling locations is located outside of each 3D model (460) of said set of 3D models, when said 3D model is placed inside said predefined volume (450).

4. The method (200) according to any one of the preceding claims, wherein determining an appearance of said point based on said local appearance models comprises assigning a weight to each local appearance model, being representative for its correlation with said point, and calculating said appearance of said point as a weighted sum of said local appearance models and their assigned weight.

5. The method according to claim 4 wherein said weights are based on at least one parameter of the group comprising a distance between said point and the sampling location of said local appearance model and the angular difference between a line connecting said point with the sampling location and a surface normal in said point.

6. The method (200) according to any one of the preceding claims, wherein said 2D projections are low resolution projections.

7. A system (600) for providing a dynamic appearance to a generic, morphable 3D model (660), based on a training set of 3D models, wherein each 3D model of said training set of 3D models comprises a geometry and an appearance, said system comprising:

- a sampling location determining unit (610) configured for determining a set of sampling locations, wherein each sampling location of said set of sampling locations is located outside of each 3D model of said training set of 3D models;
- a sample obtaining unit (620) configured for obtaining, for a plurality of 3D models of said training set of 3D models, from each sampling location of said set of sampling locations a local appearance sample, comprising a 2D projection of an appearance of an area, corresponding to said sampling location, of each 3D model (660) of the plurality of 3D models, on said sampling location;
- a model building unit (630) configured for building for each sampling location of the set of sampling locations a local appearance model by determining for each sampling location local principal components of said local appearance samples by performing a principal component analysis of said local appearance samples, and for linearly combining said local principal components for each 3D model of said plurality of 3D models;
- an appearance determining unit (640) configured for determining, for a predetermined point on the generic, morphable 3D model (660), an appearance of said point based on said local appearance models.

8. The system (600) according to claim 7, wherein said model building unit (630) is further configured for combining for each 3D model of said plurality of 3D model all local appearance samples into one general appearance sample, for determining general principal components of said general appearance samples by performing a principal component analysis of said general appearance samples, for deducing from said general principal components local principal components, and for linearly combining said local principal components.

9. The system (600) according to any one of the claims 7 or 8, wherein the sampling location determining unit (610) is configured for determining a set of sampling locations within a predefined volume (650) of a 3D space, such that each sampling location of said set of sampling locations is located outside of each 3D model (660) of said set of 3D models, when said 3D model is placed inside said predefined volume.

10. The system (600) according to any one of the claims 7 to 9, wherein the appearance determining unit (640) is configured for assigning a weight to each local appearance model, being representative for its correlation with said point, and calculating said appearance of said point as a weighted sum of said local appearance models and their assigned weight.

11. The system (600) according to claim 10 wherein said weights are based on at least one parameter of the group comprising a distance between said point and the sampling location of said local appearance model and the angular difference between a line connecting said point with the sampling location and a surface normal in said point.

12. The system (600) according to any one of the claims 7 to 11, wherein said 2D projections are low resolution projections.

13. A computer program product comprising computer-executable instructions for performing the method (200) of any one of the claims 1 to 6, when the program is run on a computer.

**Patentansprüche**

1. Computerimplementiertes Verfahren (200) zum Bereitstellen eines dynamischen Erscheinungsbilds eines generischen, morphbaren 3D-Modells, basierend auf einer Trainingsmenge von 3D-Modellen, wobei jedes 3D-Modell der Trainingsmenge von 3D-Modellen eine Geometrie und ein Erscheinungsbild umfasst, wobei das Verfahren Folgendes umfasst:

    - Bestimmen (210) einer Menge von Probestandorten, wobei sich jeder Probestandort der Menge von Probestandorten außerhalb von jedem 3D-Modell der Trainingsmenge von 3D-Modellen befindet;
    - Erlangen (220), für mehrere 3D-Modelle der Trainingsmenge von 3D-Modellen, von jedem Probestandort der Menge von Probestandorten einer lokalen Erscheinungsbildprobe, umfassend eine 2D-Projektion eines Erscheinungsbilds eines Gebietes, entsprechend dem Probestandort, von jedem 3D-Modell der mehreren 3D-Modelle, an dem Probestandort;
    - Aufbauen (230), für jeden Probestandort der Menge von Probestandorten, eines lokalen Erscheinungsbildmodells durch Bestimmen lokaler Grundkomponenten der lokalen Erscheinungsbildproben durch Durchführen einer Grundkomponentenanalyse der lokalen Erscheinungsbildproben und lineares Kombinieren der lokalen Grundkomponenten für jedes 3D-Modell der mehreren 3D-Modelle;
    - für einen vorbestimmten Punkt des generischen, morphbaren 3D-Modells: Bestimmen (240) eines Erscheinungsbilds des Punkts auf Grundlage des lokalen Erscheinungsbildmodells.

2. Verfahren nach Anspruch 1, wobei Aufbauen (230) eines lokalen Erscheinungsbildmodells, für jedes 3D-Modell der mehreren 3D-Modelle, Kombinieren aller lokalen Erscheinungsbildproben in eine Allgemeinerscheinungsbildprobe, Bestimmen von Allgemeingrundkomponenten der Allgemeinerscheinungsbildproben durch Durchführen einer Grundkomponentenanalyse der Allgemeinerscheinungsbildproben, Ableiten von lokalen Grundkomponenten aus den Allgemeingrundkomponenten und lineares Kombinieren der lokalen Grundkomponenten umfasst.

3. Verfahren (200) nach einem der vorhergehenden Ansprüche, wobei Bestimmen (210) einer Menge von Probestandorten Bestimmen einer Menge von Probestandorten innerhalb eines vordefinierten Volumens (450) eines 3D-Raums umfasst, so dass sich jeder Probestandort (451) der Menge von Probestandorten außerhalb von jedem 3D-Modell (460) der Menge von 3D-Modellen befindet, wenn das 3D-Modell im Inneren des vordefinierten Volumens (450) platziert wird.

4. Verfahren (200) nach einem der vorhergehenden Ansprüche, wobei Bestimmen eines Erscheinungsbilds des Punkts, basierend auf den lokalen Erscheinungsbildmodellen, Zuordnen eines Gewichts zu jedem lokalen Erscheinungsbildmodell, das für dessen Korrelation mit dem Punkt repräsentativ ist, und Berechnen des Erscheinungsbilds des Punkts als eine gewichtete Summe der lokalen Erscheinungsbildmodelle und deren zugeordnetem Gewicht umfasst.

5. Verfahren nach Anspruch 4, wobei die Gewichte auf mindestens einem Parameter aus der aus einer Distanz zwischen dem Punkt und dem Probestandort des lokalen Erscheinungsbildmodells und der Winkeldifferenz zwischen einer Linie, die den Punkt mit dem Probestandort verbindet, und einer Oberflächennormalen in diesem Punkt bestehenden Gruppe basieren.

6. Verfahren (200) nach einem der vorhergehenden Ansprüche, wobei die 2D-Projektionen Projektionen mit geringer Auflösung sind.

7. System (600) zum Bereitstellen eines dynamischen Erscheinungsbilds eines generischen, morphbaren 3D-Modells (660), basierend auf einer Trainingsmenge von 3D-Modellen, wobei jedes 3D-Modell der Trainingsmenge von 3D-Modellen eine Geometrie und ein Erscheinungsbild umfasst, wobei das System Folgendes umfasst:

> - eine Probestandortbestimmungseinheit (610), ausgelegt zum Bestimmen einer Menge von Probestandorten, wobei sich jeder Probestandort der Menge von Probestandorten außerhalb von jedem 3D-Modell der Trainingsmenge von 3D-Modellen befindet;
> - eine Probenerlangungseinheit (620), ausgelegt zum Erlangen, für mehrere 3D-Modelle der Trainingsmenge von 3D-Modellen, von jedem Probestandort der Menge von Probestandorten einer lokalen Erscheinungsbildprobe, umfassend eine 2D-Projektion eines Erscheinungsbilds eines Gebietes, entsprechend dem Probestandort, von jedem 3D-Modell (660) der mehreren 3D-Modelle, an dem Probestandort;
> - eine Modellaufbaueinheit (630), ausgelegt zum Aufbauen, für jeden Probestandort der Menge von Probestandorten, eines lokalen Erscheinungsbildmodells durch Bestimmen, für jeden Probestandort, lokaler Grundkomponenten der lokalen Erscheinungsbildproben durch Durchführen einer Grundkomponentenanalyse der lokalen Erscheinungsbildproben und zum linearen Kombinieren der lokalen Grundkomponenten für jedes 3D-Modell der mehreren 3D-Modelle;
> - eine Erscheinungsbildbestimmungseinheit (640), ausgelegt zum Bestimmen, für einen vorbestimmten Punkt auf dem generischen, morphbaren 3D-Modell (660), eines Erscheinungsbilds des Punkts auf Grundlage des lokalen Erscheinungsbildmodells.

8. System (600) nach Anspruch 7, wobei die Modelaufbaueinheit (630) ferner ausgelegt ist zum Kombinieren für jedes 3D-Modell der mehreren 3D-Modelle aller lokalen Erscheinungsbildproben in eine Allgemeinerscheinungsbildprobe, zum Bestimmen von Allgemeingrundkomponenten der Allgemeinerscheinungsbildproben durch Durchführen einer Grundkomponentenanalyse der Allgemeinerscheinungsbildproben, zum Ableiten von lokalen Grundkomponenten aus den Allgemeingrundkomponenten und zum linearen Kombinieren der lokalen Grundkomponenten.

9. System (600) nach einem der Ansprüche 7 oder 8, wobei die Probenstandortbestimmungseinheit (610) ausgelegt ist zum Bestimmen einer Menge von Probestandorten innerhalb eines vordefinierten Volumens (650) eines 3D-Raums, so dass sich jeder Probestandort der Menge von Probestandorten außerhalb von jedem 3D-Modell (660) der Menge von 3D-Modellen befindet, wenn das 3D-Modell im Inneren des vordefinierten Volumens platziert wird.

10. System (600) nach einem der Ansprüche 7 bis 9, wobei die Erscheinungsbildbestimmungseinheit (640) ausgelegt ist zum Zuordnen eines Gewichts zu jedem lokalen Erscheinungsbildmodell, das für dessen Korrelation mit dem Punkt repräsentativ ist, und zum Berechnen des Erscheinungsbilds des Punkts als eine gewichtete Summe der lokalen Erscheinungsbildmodelle und deren zugeordnetem Gewicht.

11. System (600) nach Anspruch 10, wobei die Gewichte auf mindestens einem Parameter aus der aus einer Distanz zwischen dem Punkt und dem Probestandort des lokalen Erscheinungsbildmodells und der Winkeldifferenz zwischen einer Linie, die den Punkt mit dem Probestandort verbindet, und einer Oberflächennormalen in diesem Punkt bestehenden Gruppe basieren.

12. System (600) nach einem der Ansprüche 7 bis 11, wobei die 2D-Projektionen Projektionen mit geringer Auflösung sind.

13. Computerprogrammprodukt, umfassend computerausführbare Anweisungen zum Durchführen des Verfahrens (200) nach einem der Ansprüche 1 bis 6, wenn man das Programm auf einem Computer laufen lässt.

**Revendications**

1. Procédé mis en oeuvre par ordinateur (200) pour fournir une apparence dynamique à un modèle 3D générique, morphable, sur la base d'un ensemble de modèles 3D d'apprentissage, chaque modèle 3D dudit ensemble de modèles 3D d'apprentissage comprenant une géométrie et une apparence, ledit procédé comprenant:

> - la détermination (210) d'un ensemble d'emplacements d'échantillonnage, chaque emplacement d'échantillonnage dudit ensemble d'emplacements d'échantillonnage étant situé à l'extérieur de chaque modèle 3D dudit ensemble de modèles 3D d'apprentissage;

- l'obtention (220), pour une pluralité de modèles 3D dudit ensemble de modèles 3D d'apprentissage, à partir de chaque emplacement d'échantillonnage dudit ensemble d'emplacements d'échantillonnage, d'un échantillon d'apparence locale, comprenant une projection 2D d'une apparence d'une zone, correspondant audit emplacement d'échantillonnage, de chaque modèle 3D de la pluralité de modèles 3D, sur ledit emplacement d'échantillonnage;

- la construction (230), pour chaque emplacement d'échantillonnage de l'ensemble d'emplacements d'échantillonnage, d'un modèle d'apparence locale par détermination de composantes locales principales desdits échantillons d'apparence locale par réalisation d'une analyse en composantes principales desdits échantillons d'apparence locale, et la combinaison linéaire desdites composantes locales principales pour chaque modèle 3D de ladite pluralité de modèles 3D;

- pour un point prédéterminé sur le modèle 3D générique, morphable: la détermination (240) d'une apparence dudit point sur la base desdits modèles d'apparence locale.

2. Procédé selon la revendication 1, dans lequel la construction (230) d'un modèle d'apparence locale comprend, pour chaque modèle 3D de ladite pluralité de modèles 3D, la combinaison de tous les échantillons d'apparence locale en un échantillon d'apparence générale, la détermination de composantes générales principales desdits échantillons d'apparence générale par réalisation d'une analyse en composantes principales desdits échantillons d'apparence générale, la déduction à partir desdites composantes générales principales de composantes locales principales, et la combinaison linéaire desdites composantes locales principales.

3. Procédé (200) selon l'une quelconque des revendications précédentes, dans lequel la détermination (210) d'un ensemble d'emplacements d'échantillonnage comprend la détermination d'un ensemble d'emplacements d'échantillonnage à l'intérieur d'un volume prédéfini (450) d'un espace 3D, de telle sorte que chaque emplacement d'échantillonnage (451) dudit ensemble d'emplacements d'échantillonnage soit situé à l'extérieur de chaque modèle 3D (460) dudit ensemble de modèles 3D, quand ledit modèle 3D est placé à l'intérieur dudit volume prédéfini (450).

4. Procédé (200) selon l'une quelconque des revendications précédentes, dans lequel la détermination d'une apparence dudit point sur la base desdits modèles d'apparence locale comprend l'attribution, à chaque modèle d'apparence locale, d'un poids qui est représentatif de sa corrélation avec ledit point, et le calcul de ladite apparence dudit point comme une somme pondérée desdits modèles d'apparence locale et leur poids attribué.

5. Procédé selon la revendication 4 dans lequel lesdits poids sont basés sur au moins un paramètre du groupe comprenant une distance entre ledit point et l'emplacement d'échantillonnage dudit modèle d'apparence locale et la différence angulaire entre une ligne reliant ledit point avec l'emplacement d'échantillonnage et une normale à la surface audit point.

6. Procédé (200) selon l'une quelconque des revendications précédentes, dans lequel lesdites projections 2D sont des projections à basse résolution.

7. Système (600) destiné à fournir une apparence dynamique à un modèle 3D générique, morphable (660), sur la base d'un ensemble de modèles 3D d'apprentissage, chaque modèle 3D dudit ensemble de modèles 3D d'apprentissage comprenant une géométrie et une apparence, ledit système comprenant:

- une unité de détermination d'emplacements d'échantillonnage (610) configurée pour déterminer un ensemble d'emplacements d'échantillonnage, chaque emplacement d'échantillonnage dudit ensemble d'emplacements d'échantillonnage étant situé à l'extérieur de chaque modèle 3D dudit ensemble de modèles 3D d'apprentissage;

- une unité d'obtention d'échantillons (620) configurée pour obtenir, pour une pluralité de modèles 3D dudit ensemble de modèles 3D d'apprentissage, à partir de chaque emplacement d'échantillonnage dudit ensemble d'emplacements d'échantillonnage, un échantillon d'apparence locale, comprenant une projection 2D d'une apparence d'une zone, correspondant audit emplacement d'échantillonnage, de chaque modèle 3D (660) de la pluralité de modèles 3D, sur ledit emplacement d'échantillonnage;

- une unité de construction de modèles (630) configurée pour construire, pour chaque emplacement d'échantillonnage de l'ensemble d'emplacements d'échantillonnage, un modèle d'apparence locale en déterminant, pour chaque emplacement d'échantillonnage, des composantes locales principales desdits échantillons d'apparence locale en réalisant une analyse en composantes principales desdits échantillons d'apparence locale, et pour combiner linéairement lesdites composantes locales principales pour chaque modèle 3D de ladite pluralité de modèles 3D;

- une unité de détermination d'apparence (640) configurée pour déterminer, pour un point prédéterminé sur le modèle 3D générique, morphable (660), une apparence dudit point sur la base desdits modèles d'apparence locale.

8. Système (600) selon la revendication 7, dans lequel ladite unité de construction de modèles (630) est également configurée pour combiner, pour chaque modèle 3D de ladite pluralité de modèles 3D, tous les échantillons d'apparence locale en un échantillon d'apparence générale, pour déterminer des composantes générales principales desdits échantillons d'apparence générale en réalisant une analyse en composantes principales desdits échantillons d'apparence générale, pour déduire à partir desdites composantes générales principales des composantes locales principales, et pour combiner linéairement lesdites composantes locales principales.

9. Système (600) selon l'une quelconque des revendications 7 ou 8, dans lequel l'unité de détermination d'emplacements d'échantillonnage (610) est configurée pour déterminer un ensemble d'emplacements d'échantillonnage à l'intérieur d'un volume prédéfini (650) d'un espace 3D, de telle sorte que chaque emplacement d'échantillonnage dudit ensemble d'emplacements d'échantillonnage soit situé à l'extérieur de chaque modèle 3D (660) dudit ensemble de modèles 3D, quand ledit modèle 3D est placé à l'intérieur dudit volume prédéfini.

10. Système (600) selon l'une quelconque des revendications 7 à 9, dans lequel l'unité de détermination d'apparence (640) est configurée pour attribuer, à chaque modèle d'apparence locale, un poids qui est représentatif de sa corrélation avec ledit point, et calculer ladite apparence dudit point comme une somme pondérée desdits modèles d'apparence locale et leur poids attribué.

11. Système (600) selon la revendication 10 dans lequel lesdits poids sont basés sur au moins un paramètre du groupe comprenant une distance entre ledit point et l'emplacement d'échantillonnage dudit modèle d'apparence locale et la différence angulaire entre une ligne reliant ledit point avec l'emplacement d'échantillonnage et une normale à la surface audit point.

12. Système (600) selon l'une quelconque des revendications 7 à 11, dans lequel lesdites projections 2D sont des projections à basse résolution.

13. Produit-programme informatique comprenant des instructions exécutables par ordinateur pour réaliser le procédé (200) de l'une quelconque des revendications 1 à 6, quand le programme est exécuté sur un ordinateur.

FIG. 1

200

210

determining
a set of sampling
locations

220

obtaining
a local appearance
sample

230

building
a local appearance
model

240

determining
an appearance
for a predefined
point

## FIG. 2

FIG. 3

FIG. 4

**FIG. 5**

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6556196 B1
- EP 14305593 A